# EUROPEAN PATENT APPLICATION

(11) **EP 4 723 664 A1**
(43) Date of publication of application: **08.04.2026**
(21) Application number: 24813915.6
(22) Date of filing: 11.04.2024
(51) Int. Cl.: H04Q 11/00

(54) **INFORMATION TRANSMITTING METHOD, INFORMATION RECEIVING METHOD, COMMUNICATION NODE, AND STORAGE MEDIUM**

(30) Priority: 29.05.2023 CN 202310617343
(71) Applicant: ZTE Corporation, Shenzhen, Guangdong 518057 (CN)
(72) Inventor: WEI, Shengjing, Shenzhen, Guangdong 518057 (CN); WANG, Peng, Shenzhen, Guangdong 518057 (CN); JIANG, Yi, Shenzhen, Guangdong 518057 (CN); ZHANG, Weiliang, Shenzhen, Guangdong 518057 (CN)
(74) Representative: Vossius & Partner Patentanwälte Rechtsanwälte mbB
(86) International application number: PCT/CN2024/087185
(87) International publication number: WO 2024/244709

(57) **Abstract**

Embodiments of the present disclosure provide methods for transmitting and receiving information, a communication node, and a storage medium. The transmitting method includes: transmitting, by a first communication node, wavelength indication information to a second communication node, where the wavelength indication information is used for indicating a wavelength to be used when the second communication node transmits information to the first communication node.

## Description

### FIELD

The present application relates to the field of communication technology, for example, to methods for transmitting and receiving information, a communication node, and a storage medium.

### BACKGROUND

With the continuous development of optical networks, fiber to the home (FTTH) has been fully rolled out, and its central office products such as an optical line terminal (OLT) and terminal products such as an optical network unit (ONU) have also been widely applied. In passive optical network (PON) systems, passive optical network devices can be classified into a gigabit-capable passive optical network (GPON) device, a10-gigabit-capable passive optical network (XGPON) device, a 10-gigabit-capable symmetric passive optical network (XGSPON) device, a 50-gigabit-capable passive optical network (50GPON) device, as well as future 100GPON, 200GPON, etc., according to different transmission convergence (TC) layer protocols. The architecture of these passive optical network systems generally includes the optical line terminal (OLT), the optical network unit (ONU), and an optical distribution network (ODN).

In the passive optical network systems, upstream and downstream bands occupied by PON access technologies in different modes are not exactly the same. To coexist with conventional PON systems, the 50GPON system defines three different upstream wavelength options: option1: 1260 nm to 1280 nm; option2: 1290 nm to 1310 nm; and option3: 1284 nm to 1288 nm. According to the provisions of G.9804.2, there is no mechanism for the ONU to ascertain which upstream wavelength option is adopted or supported by the OLT.

In practical applications, a 50GPON OLT can choose one upstream wavelength option for deployment and is always aware of which wavelength option it supports. However, the ONU accessing the 50GPON OLT cannot know which wavelength option the OLT is using, but the ONU may acquire downstream synchronization and learn upstream burst profile messages, thereby jumping from the O1 state (i.e., the initial state) to the O2 to 03 state (i.e., the serial number state).During the O2 to O3 state, once the ONU receives a serial number (SN) opening window, the ONU reports an SN physical layer operations, administration and maintenance (PLOAM) message. However, if the upstream wavelength of this ONU is different from the wavelength option currently used by the OLT, the OLT neither receives or processes this message, nor will it allocate an ONU-identity (ID) to this ONU. Therefore, the ONU remains in the O2 to O3 state and continuously responds to the SN opening window, that is, continuously transmits the SN PLOAM message, unless an event occurs that causes the ONU to jump out of the current state, such as failing to receive downstream frame synchronization or the OLT transmitting a disable message.

However, in certain scenarios, for example, when the upstream wavelength used by the ONU to transmit the SN PLOAM messages matches the upstream wavelength in a conventional PON network, the above-mentioned method of the ONU continuously transmitting the SN PLOAM message may cause the SN PLOAM message transmitted by this ONU to be received by the OLT in the conventional PON network, or cause a conflict between the SN PLOAM message transmitted by this ONU and that transmitted by the ONU in the conventional PON network. In summary, in some scenarios, when the 50GPON ONU coexists with the conventional PON system, upstream conflicts with the conventional PON system may be caused.

### SUMMARY

An embodiment of the present application provides a method for transmitting information, applied to a first communication node. The method includes:
transmitting wavelength indication information to a second communication node, where the wavelength indication information is used for indicating a wavelength to be used when the second communication node transmits information to the first communication node.

An embodiment of the present application provides a method for transmitting information, applied to a second communication node. The method includes:
receiving wavelength indication information transmitted by a first communication node, where the wavelength indication information is used for indicating a wavelength to be used when the second communication node transmits information to the first communication node;
determining, according to the wavelength indication information, the wavelength to be used when the second communication node transmits information to the first communication node; and
in the case that a wavelength supported by the second communication node does not match the wavelength to be used, remaining muted or switching the supported wavelength to the wavelength to be used.

An embodiment of the present application provides a first communication node, including a processor. The processor is configured to implement the method for transmitting information according to any one of the above-mentioned embodiments when executing a computer program.

An embodiment of the present application provides a second communication node, including a processor. The processor is configured to implement the method for receiving information according to any one of the above-mentioned embodiments when executing a computer program.

An embodiment of the present application further provides a computer-readable storage medium, having a computer program stored therein. The computer program, when executed by the processor, causes the method of any of the above-mentioned embodiments to be implemented.

Further descriptions regarding the above-mentioned embodiments and other aspects of the present application, as well as the implementations, are provided in the description of the drawings, detailed description of embodiments, and claims.

### BRIEF DESCRIPTION OF THE DRAWINGS

FIG. 1 illustrates a schematic diagram of an application scenario of a method for transmitting and receiving information according to an embodiment;
FIG. 2 illustrates a flowchart of an ONU state machine;
FIG. 3 illustrates a schematic flowchart of a method for transmitting information according to an embodiment;
FIG. 4 illustrates a schematic diagram of a position of wavelength indication information in a burst profile PLOAM message according to an embodiment;
FIG. 5A illustrates a schematic diagram of band width BWmap entry information according to an embodiment;
FIG. 5B illustrates a schematic diagram of band width BWmap entry information according to another embodiment;
FIG. 5C illustrates a schematic diagram of band width BWmap entry information according to yet another embodiment;
FIG. 6 illustrates a schematic diagram of a position of wavelength indication information in an OC body message according to another embodiment;
FIG. 7 illustrates a schematic diagram of a position of wavelength indication information in a Broadcast Alloc-ID message according to yet another embodiment;
FIG. 8 illustrates a schematic diagram of a position of wavelength indication information in a System_Profile message according to still another embodiment;
FIG. 9 illustrates a schematic diagram of a position of wavelength indication information in a Channel_Profile message according to a further embodiment;
FIG. 10 illustrates a schematic diagram of a position of wavelength indication information in a newly added PLOAM message according to a further embodiment;
FIG. 11 illustrates a schematic flowchart of a method for receiving information according to an embodiment;
FIG. 12 illustrates a schematic flowchart of a method for receiving information according to another embodiment;
FIG. 13 illustrates a schematic diagram of an interaction process of a method for transmitting and receiving information according to an embodiment;
FIG. 14 illustrates a schematic structural diagram of an apparatus for transmitting information according to an embodiment;
FIG. 15 illustrates a schematic structural diagram of an apparatus for receiving information according to an embodiment; and
FIG. 16 illustrates a schematic structural diagram of a communication node according to an embodiment.

### DETAILED DESCRIPTION OF EMBODIMENTS

It should be understood that specific embodiments described herein are merely used to explain the present application and are not intended to limit the present application. The embodiments of the present application will be described in detail below in conjunction with the accompanying drawings.

A method for transmitting information and a method for transmitting a signal provided in the present application may be applied to PON systems, such as high-speed passive optical networks like 50GPON, 100GPON, and 200GPON.The following description takes the application in the 50GPON as an example. To coexist with conventional PON systems, the 50GPON system defines three different upstream wavelength options: option1: 1260 nm to 1280 nm; option2: 1290 nm to 1310 nm; and option3: 1284 nm to 1288 nm. As shown in Table 1.

**Table 1 Upstream and Downstream Wavelengths in Various PON Systems**

| | Upstream Wavelength | Downstream Wavelength |
|---|---|---|
| GPON | 1300 nm to 1320 nm | 1480 nm to 1500 nm |
| XGPON | 1260 nm to 1280 nm | 1575 nm to 1580 nm |
| XGSPON | 1300 nm to 1320 nm, 1260 nm to 1280 nm | 1480 nm to 1500 nm, 1575 nm to 1580 nm |
| 50GPON | 1260 nm to 1280 nm (option1) | 1340 nm to 1344 nm |
| | 1290 nm to 1310 nm (option2) | |
| | 1284 nm to 1288 nm (option3) | |

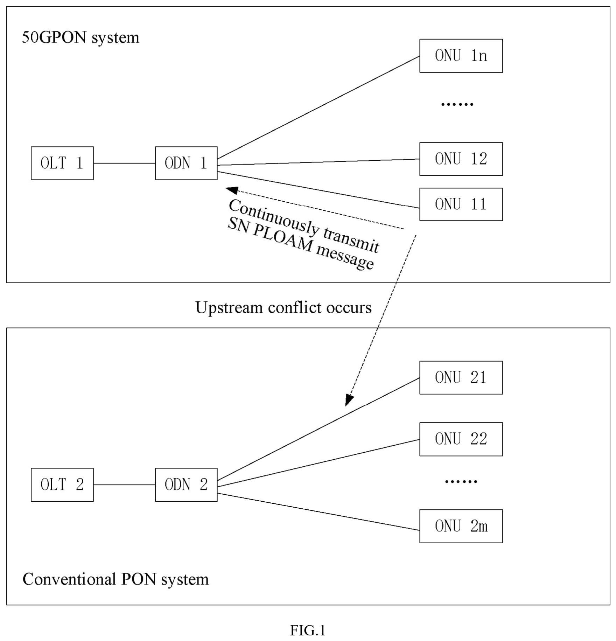

FIG. 1 illustrates a schematic diagram of an application scenario of a method for transmitting and receiving information according to an embodiment. As shown in FIG. 1, in a certain scenario, there are two PON systems: a 50GPON system and a conventional PON system. The conventional PON system here may be at least one of GPON, XGPON, or XGSPON. In the 50GPON system, OLT 1 is connected to a plurality of ONUs such as ONU 11, ONU 12, ..., and ONU 1n via ODN 1. In the conventional PON system, OLT 2 is connected to a plurality of ONUs such as ONU 21, ONU 22, ..., and ONU 2m via ODN 2. Here, both m and n are integers greater than 0.

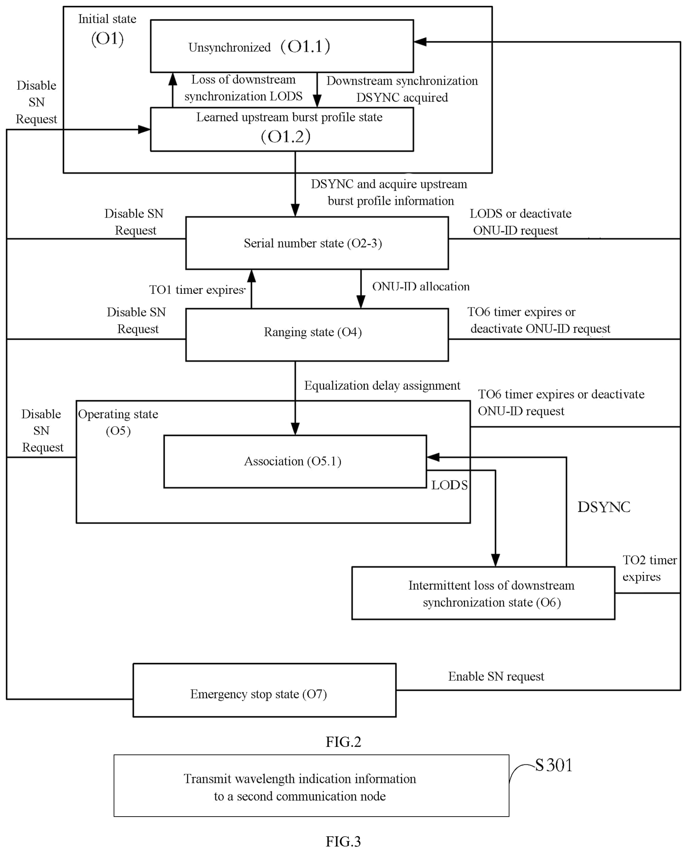

FIG. 2 illustrates a flowchart of an ONU state machine. As shown in FIG. 2, states of an ONU include: O1, 02, 03, 04, O5, 06, and O7-emergency stop state. When the ONU acquires downstream synchronization (DSYNC) and learns an upstream burst profile message, the ONU jumps from the O1 state (i.e., an initial state) to the O2 to O3 state (i.e., a serial number state). During the O2 to O3 state, once the ONU receives an SN opening window, the ONU may report an SN PLOAM message. Other states of the ONU state machine in FIG. 2 are briefly introduced below. As shown in FIG. 2, the O1 state includes two states: an O1.1-off-sync state and an O1.2-learned burst profile state (profile learning). A condition for transitioning from O1.1 to O1.2 is acquiring DSYNC. A condition for transitioning from O1.2 to O1.1 is loss off downstream sync (LODS). A condition for transitioning from the O2 to O3 state to an O4-ranging state is acquiring ONU-ID assignment. A condition for transitioning from O4 to the O2 to O3 state is that a TO1 timer expires (TO1 expires). When acquiring equalization delay assignment (EqD assignment) in the O4 state, the state transitions to an O5.1-association state in an O5-operating state. Under 05.1, if LODS occurs, the state transitions to an O6-intermittent LODS state. In the O6 state, when downstream synchronization is acquired, the 05.1 state may be restored. There are some other transition processes as shown in FIG. 2, which are not detailed here.

In the related art, since each ONU accessing a 50GPON OLT cannot know which wavelength option the OLT 1 currently uses, if the upstream wavelength of the ONU 11 is different from the wavelength option currently used by the OLT, the OLT cannot receive or process the SN PLOAM message sent by the ONU 11, nor does it allocate an ONU-ID to this ONU 11.Therefore, the ONU 11 remains in the O2 to O3 state and continuously responds to the SN opening window, that is, continuously transmits the SN PLOAM message, unless an event occurs that causes the ONU 11 to jump out of the current state, such as failing to receive downstream frame synchronization or the OLT 1 transmitting a disable message. Assume that the OLT 1 supports the option3, while the ONU 11 uses the option1 for upstream transmission. Assume that the OLT 2 is an OLT in an XGPON system. As can be seen from Table 1, the option1 matches an upstream wavelength in the XGPON system, and the option2 matches an upstream wavelength in the GPON or XGSPON system. Therefore, when the ONU 11 continuously transmits the SN PLOAM message using the option1, due to wavelength matching, the SN PLOAM message may be received by the OLT 2, or may cause upstream conflicts with at least one ONU among the ONU 21, the ONU 22, ..., and the ONU 2m, reducing communication reliability.

In this embodiment of the present application, a method for transmitting and receiving information, a communication node, and a storage medium are provided. By transmitting wavelength indication information from a first communication node to a second communication node, the wavelength indication information is used for indicating a wavelength to be used when the second communication node transmits information to the first communication node, so as to notify the second communication node of the wavelength to be used when transmitting the information to the first communication node, that is, a wavelength supported by the first communication node. When the second communication node determines that the wavelength it supports does not match the wavelength supported by the first communication node, the second communication node enters a mute state or switches the supported wavelength to the wavelength to be used, thereby avoiding a problem of conflicts with other systems caused by the second communication node continuously responding to the SN opening window when the wavelength supported by the second communication node does not match the wavelength supported by the first communication node, and improving communication reliability.

The method for transmitting information, the method for receiving information, and the communication node, as well as their technical effects are described as below.

FIG. 3 illustrates a schematic flowchart of a method for transmitting information according to an embodiment. The method provided in this embodiment is applicable to the first communication node. In this embodiment, the first communication node (also referred to as a first communication node device) may be an OLT. As shown in FIG. 3, the method includes the following operations:
S301: Transmitting wavelength indication information to the second communication node.

The wavelength indication information is used for indicating a wavelength to be used when the second communication node transmits information to the first communication node.

Optionally, the first communication node periodically transmits the wavelength indication information to the second communication node.

In this embodiment, the wavelength to be used when the second communication node transmits information to the first communication node may also be described as: the wavelength supported by the first communication node, or the wavelength currently used by the first communication node.

In this embodiment, the second communication node may be an ONU. In a scenario where the first communication node is the OLT and the second communication node is the ONU, it should be understood that the wavelength to be used when the second communication node transmits information to the first communication node refers to an upstream wavelength.

In an embodiment, the wavelength to be used when the second communication node transmits information to the first communication node includes at least one of the following wavelength ranges: 1260 nm to 1280 nm, 1290 nm to 1310 nm, and 1284 nm to 1288 nm.

In an embodiment, the wavelength indication information is used to indicate an option of a wavelength to be used when the second communication node transmits information to the first communication node. The wavelength range for the option1 is 1260 nm to 1280 nm, the wavelength range for the option2 is 1290 nm to 1310 nm, and the wavelength range for the option3 is 1284 nm to 1288 nm.

It can be seen that the wavelength indication information may indicate one or more wavelength ranges, or may also indicate one or more wavelength options. Of course, it should be understood that the wavelength indication information may also indicate one or more specific wavelengths. This embodiment is not limited to this.

In an embodiment, the first communication node transmits the wavelength indication information to the second communication node via a first message.

In an embodiment, the first message includes at least one of the following: a Burst Profile PLOAM message, an Operation Control (OC) body message, a Broadcast Allocation-ID (Broadcast Alloc-ID) message, a system_profile message, a Channel_Profile message, or a newly added PLOAM message.

Various implementations of the first message are introduced below respectively. In the following implementations, the wavelength indication information is used as an example to indicate an option of a wavelength to be used when the second communication node transmits information to the first communication node. As shown above, the wavelength range for the option1 is 1260 nm to 1280 nm, the wavelength range for the option2 is 1290 nm to 1310 nm, and the wavelength range for the option3 is 1284 nm to 1288 nm.

In a first implementation, the first message is a Burst Profile PLOAM message. Optionally, the wavelength indication information is located in a reserved position in the Burst Profile PLOAM message.

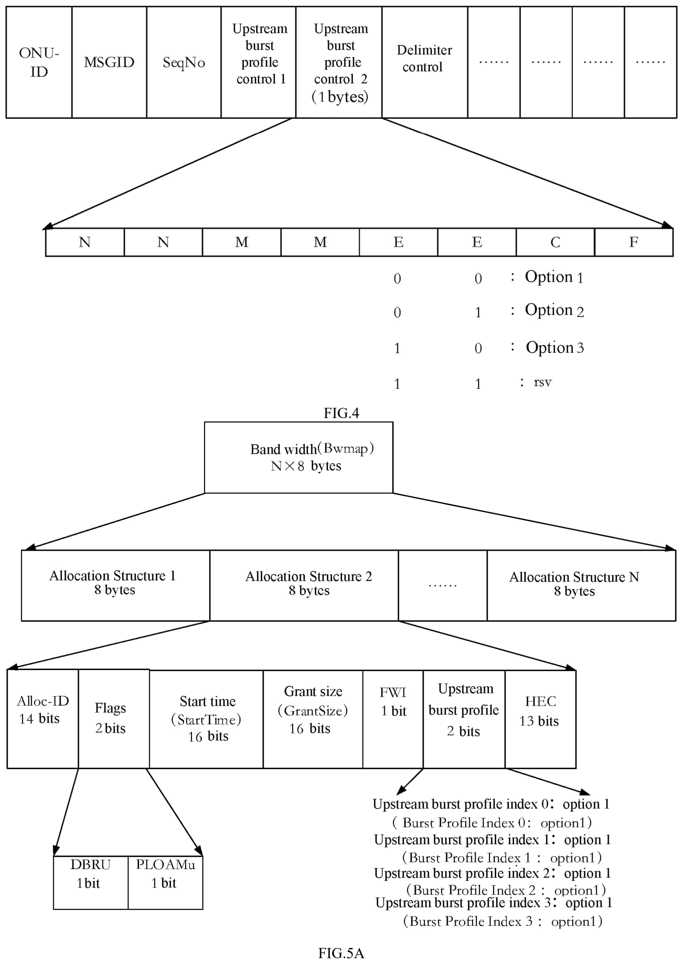

Optionally, the wavelength indication information is located in a second bit and a third bit of a sixth byte in the burst profile PLOAM message. Table 2 shows a structure of the Burst Profile PLOAM message. FIG. 4 illustrates a schematic diagram of a position of wavelength indication information in the Burst Profile PLOAM message according to an embodiment. As shown in Table 2 and FIG. 4, the sixth byte in the Burst Profile PLOAM message is a Burst Profile control 2 field. The wavelength indication information is flagged by a second bit and a third bit (EE) of the burst profile control 2 field. For example, it may be defined that when EE = 00, it represents that the current upstream wavelength adopted by the OLT is the option1; when EE = 01, it is the option 2; and when EE = 10, it is the option3.The remaining values are reserved values. When specifying the upstream wavelength, the OLT should not set EE to reserved values (rsv).

Indication bits including the bit3 and the bit2 of the Burst Profile control 2 field announce supported upstream wavelength options. The two indication bits may represent 4 different states, while the G.9804.3 standard only specifies 3 upstream wavelength options, and therefore one state needs to be reserved and undefined. After the OLT selects the supported upstream wavelength option, the two indication bits cannot be in an undefined state. If an ONU side receives indication bits in the undefined state, a default behavior may be to remain muted.

**Table 2 Burst Profile PLOAM message.**

| Octet Number | Content | Description |
|---|---|---|
| 1-2 | Passive Optical Network Unit-Identity (ONU-ID) | It identifies whether the message is a unicast message transmitted to a specific ONU or a broadcast message transmitted to all ONUs. If it is a broadcast message transmitted to all ONUs, ONU-ID=0x3FF. |
| 3 | Message Type Identity (MSGID) | 0x01, "Upstream burst profile". |
| 4 | sequence number (SeqNo) | 8-bit unicast or broadcast PLOAM sequence number, determined by actual situations. |
| 5 | Upstream Burst Profile Control 1 (Burst profile control 1) | 8-bit field arranged in the format VVVB BBPP, where: |
| | | VVV-a 3-bit burst profile version number. If the content of the burst profile changes, an optical line terminal channel termination (OLT CT) needs to ensure that the version number is changed synchronously, such that the ONU can detect this change based solely on the version number. |
| | | BBB-a code point that identifies the applicability of a message to a specific upstream line rate. The code point is specified in physical media dependent (PMD). |
| | | PP-2-a bit burst profile index. |
| 6 | Upstream Burst Profile Control 2 (Burst profile control 2) | NNMM EECF, where: |
| | | NN- the total number of upstream physical synchronization block (PSBu) segments minus 1, ranging from 0 to 3. |
| | | MM- continuous PSBu segment sequence numbers starting from 0, ranging from 0 to 3. |
| | | The PSBu segments transmitted on an optical channel are concatenated in an order provided by this field, with 0 corresponding to a first transmitted PSBu segment. |
| | | EE-Upstream wavelength indication. |
| | | The upstream wavelength indication identifies an upstream wavelength that the ONU must use. |
| | | 00-Upstream wavelength option1 |
| | | 01-Upstream wavelength option2 |
| | | 10-Upstream wavelength option3 |
| | | 11-Reserved value |
| | | C- Cross-channel burst profile identity (TWDM only) |
| | | C=0: The burst profile is applicable to this channel and a downstream wavelength channel to which the burst profile applies is identified by a PON-ID field in bytes 35 to 38 of this message. |
| | | F-Upstream forward error correction (FEC) identity: |
| | | F=1: FEC is on; and |
| | | F=0: FEC is off. |
| | | If MM is not equal to NN, a receiver needs to ignore the content of this byte field. |
| ... | ... | ... |

In this implementation, when the OLT specifies the upstream wavelength as any one of the option1, the option2, or the option3, for ease of description, let's assume it is the option1. The upstream burst profile index (as indicated by PP bits in the fifth byte in Table 2) in the Burst_Profile message issued by the OLT, ranging from 0 to 3, may be bound to the option1. In other words, there is a mapping relationship between the Burst Profile Index in the Burst Profile PLOAM message and the wavelength indication information. In this implementation, the first communication node may also transmit band width (BWmap) entry information to the second communication node. The BWmap entry information includes a burst profile index corresponding to the wavelength indication information. FIG. 5A illustrates a schematic diagram of band width BWmap entry information according to an embodiment. As shown in FIG. 5A, an Allocation Structure 2 in the BWmap entry information includes a 2-bit Burst Profile. The Burst Profile may be set to the Burst Profile Index mapping to the option1 to once again indicate to the second communication node the wavelength to be used when transmitting information to the first communication node, thereby further improving communication reliability and increasing the flexibility of application scenarios.

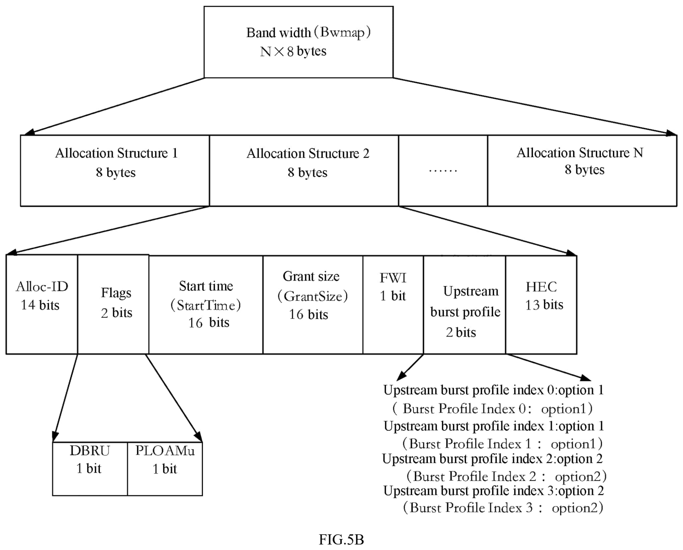

In this implementation, when the OLT specifies the upstream wavelength as any two of the option1, the option2, or the option3, for ease of description, let's assume they are the option1 and the option2. In the Burst_Profile message issued by the OLT, the Burst Profile Index 0 (i.e., binary 00) and 1 (i.e., binary 01) may be bound to the option1, while the Burst Profile Index 2 (i.e., binary 10) and 3 (i.e., binary 11) may be bound to the option2.The first communication node may also transmit the BWmap entry information to the second communication node. FIG. 5B illustrates a schematic diagram of band width BWmap entry information according to another embodiment. The burst profile in a BWmap entry is set by the OLT (i.e., the first communication node) and is used by the ONU (i.e., the second communication node) to determine preamble, delimiting, etc., to be used when transmitting upstream frames within a time window allocated by this entry. Due to a binding relationship between the Burst Profile Index and the options, when the ONU transmits the upstream frames within the time window allocated by this entry, which upstream wavelength to use for transmitting may also be determined according to the Burst Profile. For the ONU supporting a plurality of upstream wavelengths, the flexibility of application scenarios may be increased through the mapping relationship. As shown in FIG. 5B, the burst profile in the BWmap entry information may be set to the Burst Profile Index mapping to the option1 or to the Burst Profile Index mapping to the option2. It should be understood that a mapping relationship between the burst profile index and the wavelength options may be set according to actual needs, and this implementation only provides an example.

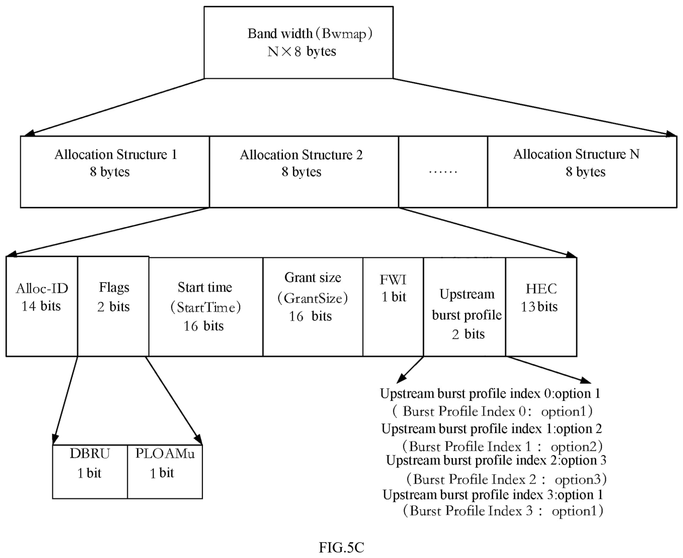

In this implementation, when the OLT specifies the upstream wavelength as the option1, the option2, and the option3, in the Burst_Profile message issued by the OLT, the Burst Profile Index 0 and 3 may be bound to the option1, the Burst Profile Index 1 may be bound to the option2, and the Burst Profile Index 2 may be bound to the option3.The first communication node may also transmit the BWmap entry information to the second communication node. FIG. 5C illustrates a schematic diagram of band width BWmap entry information according to yet another embodiment. As shown in FIG. 5C, the burst profile in the BWmap entry information may be set to the Burst Profile Index mapped to the option1, or to the Burst Profile Index mapped to the option2, or to the Burst Profile Index mapped to the option3, thereby further improving communication reliability and increasing the flexibility of application scenarios.

In a second implementation, the first message is an OC body message. Optionally, the wavelength indication information is located in a reserved position in a passive optical network-identity (PON-ID) field.

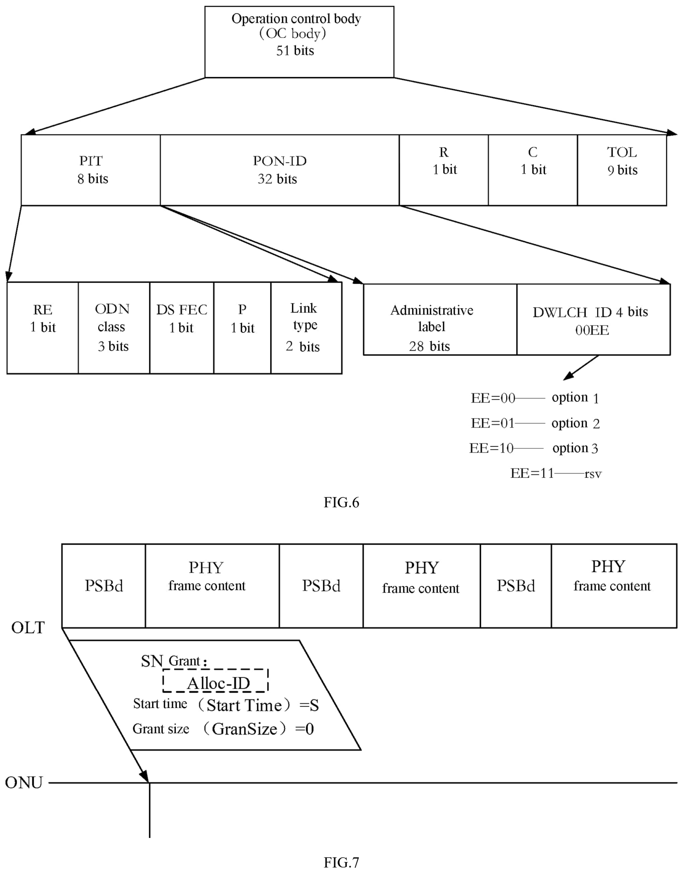

Optionally, the wavelength indication information is located in the two least significant bits of a downstream wavelength channel (DWLCH) ID in the PON-ID field. FIG. 6 illustrates a schematic diagram of a position of wavelength indication information in an OC body message according to another embodiment. An OC body may also be referred to as an OC structure. As shown in FIG. 6, low two bits (bit0 and bit1) of the DWLCH ID in the PON-ID field, namely bits EE, flag the upstream wavelength option. For example, it may be defined that when EE = 00, it represents that the current upstream wavelength adopted by the OLT is the option 1; when EE = 01, it is the option 2; when EE = 10, it is the option 3; and EE=11 is reserved. When specifying the upstream wavelength, the OLT should not set the low two bits of the DWLCH ID to reserved values.

In a third implementation, in the case that the first message is a Broadcast Alloc-ID message, the wavelength indication information has a mapping relationship with the alloc-id.

When the OLT announces upstream wavelength options through the alloc-id, introducing additional broadcast alloc-IDs may be considered for announcing the upstream wavelength information. Currently, G.9804.2 specifies a range of alloc-ids, where 0 to 1019 are default alloc-ids; and 1020 to 1023 are reserved broadcast alloc-ids used to announce which upstream rate used by the ONU.1020 is used for ONUs with an upstream rate of 49.7664 Gbit/s to report SNs; 1021 is used for ONUs with an upstream rate of 24.8832 Gbit/s to report SNs; 1022 is used for ONUs with an upstream rate of 12.4416 Gbit/s to report SNs; and 1023 is used for ONUs that support one of the above-mentioned three upstream rates to report SNs.

Optionally, the wavelength indication information is used to indicate at least one of a first wavelength, a second wavelength, or a third wavelength. The first wavelength has a mapping relationship with alloc-ids 1020 to 1023, where the alloc-ids 1020 to 1023 are further respectively mapped to four transmission rates or rate combinations. The second wavelength has a mapping relationship with any four of alloc-ids 1012 to 1019 and 1024 to 16383, where the any four alloc-ids are further respectively mapped to four transmission rates or rate combinations. The third wavelength has a mapping relationship with other four alloc-ids from the alloc-ids 1012 to 1019 and 1024 to 16383, excluding the above-mentioned any four alloc-ids, where the other four alloc-ids are further respectively mapped to the above-mentioned four transmission rates or rate combinations. This implementation may achieve flexible matching between the transmission rates and the wavelength options.

It can be seen that the current four reserved alloc-ids correspond to four different upstream rates or rate combinations respectively. To carry upstream wavelength option information, it may be considered to additionally bind 1020 to 1023 with any one of the three wavelength options, assumed to be the option1; bind 1016 to 1019 respectively with the upstream rates or rate combinations bound to 1020 to 1023 and also with the wavelength option option2; and similarly, bind 1012 to 1015 respectively with the upstream rates or rate combinations bound to 1020 to 1023 and also with the wavelength option option3. Table 3 shows values of alloc-ids.

**Table 3 alloc-id**

| Alloc-ID | Designation | Comment |
|---|---|---|
| 0..1011 | Default directed | Default alloc-id, fully used for allocation, and the value is equal to the ONU-ID |
| 1012 | Reserved broadcast | Used by the OLT CT in an allocation structure of an SN bandwidth to identify any ONU that selects an upstream rate of ρ0ϕ0 and the upstream wavelength option option3 for transmission. An active program executing a serial number acquisition phase will use this allocation to transmit a serial number response. |
| 1013 | Reserved broadcast | Used by the OLT CT in the allocation structure of the SN bandwidth to identify any ONU that selects an upstream rate of ρ0ϕ1 and the upstream wavelength option option3 for transmission. The active program executing the serial number acquisition phase will use this allocation to transmit the serial number response. |
| 1014 | Reserved broadcast | Used by the OLT CT in the allocation structure of the SN bandwidth to identify any ONU that selects an upstream rate of ρ0ϕ2 and the upstream wavelength option option3 for transmission. The active program executing the serial number acquisition phase will use this allocation to transmit the serial number response. |
| 1015 | Reserved broadcast | Used by the OLT CT in the allocation structure of the SN bandwidth to identify any ONU that selects the upstream rate of ρ0ϕ0, ρ0ϕ1, or ρ0ϕ2 and the upstream wavelength option option3 for transmission. The active program executing the serial number acquisition phase will use this allocation to transmit the serial number response. |
| 1016 | Reserved broadcast | Used by the OLT CT in the allocation structure of the SN bandwidth to identify any ONU that selects the upstream rate of ρ0ϕ0 and the upstream wavelength option option2 for transmission. The active program executing the serial number acquisition phase will use this allocation to transmit the serial number response. |
| 1017 | Reserved broadcast | Used by the OLT CT in the allocation structure of the SN bandwidth to identify any ONU that selects the upstream rate of ρ0ϕ1 and the upstream wavelength option option2 for transmission. The active program executing the serial number acquisition phase will use this allocation to transmit the serial number response. |
| 1018 | Reserved broadcast Reserved broadcast | Used by the OLT CT in the allocation structure of the SN bandwidth to identify any ONU that selects the upstream rate of ρ0ϕ2 and the upstream wavelength option option2 for transmission. The active program executing the serial number acquisition phase will use this allocation to transmit the serial number response. |
| 1019 | Reserved broadcast | Used by the OLT CT in the allocation structure of the SN bandwidth to identify any ONU that selects the upstream rate of ρ0ϕ0, ρ0ϕ1, or ρ0ϕ2 and the upstream wavelength option option2 for transmission. The active program executing the serial number acquisition phase will use this allocation to transmit the serial number response. |
| 1020 | Reserved broadcast | Used by the OLT CT in the allocation structure of the SN bandwidth to identify any ONU that selects the upstream rate of ρ0ϕ0 and the upstream wavelength option option1 for transmission. The active program executing the serial number acquisition phase will use this allocation to transmit the serial number response. |
| 1021 | Reserved broadcast | Used by the OLT CT in the allocation structure of the SN bandwidth to identify any ONU that selects the upstream rate of ρ0ϕ1 and the upstream wavelength option option1 for transmission. The active program executing the serial number acquisition phase will use this allocation to transmit the serial number response. |
| 1022 | Reserved broadcast | Used by the OLT CT in the allocation structure of the SN bandwidth to identify any ONU that selects the upstream rate of ρ0ϕ2 and the upstream wavelength option option1 for transmission. The active program executing the serial number acquisition phase will use this allocation to transmit the serial number response. |
| 1023 | Reserved broadcast | Used by the OLT CT in the allocation structure of the SN bandwidth to identify any ONU that selects the upstream rate of ρ0ϕ0, ρ0ϕ1, or ρ0ϕ2 and the upstream wavelength option option1 for transmission. The active program executing the serial number acquisition phase will use this allocation to transmit the serial number response. |
| 1024..16383 | Explicitly assignable | If one ONU requires more than one specified alloc-id (including the default Alloc-ID), the OLT CT may select a unique number within this range as the specified alloc-id to be assigned to the ONU and announce the specified alloc-id to the ONU through an Assign_Alloc-ID PLOAM message, for activating ONUs with upstream rate combinations that have no reserved or competition-based Alloc-IDs. The OLT CT dynamically allocates a competition-based alloc-id by selecting a unique number from a pool for specific competition-based functions and announces the alloc-id to all ONUs by broadcasting the Assign_Alloc-ID PLOAM message. |
| ... | ... | ... |

As shown previously, besides utilizing the alloc-IDs 1012 to 1019 as described above, it is also feasible to consider using the reserved explicitly assignable alloc-IDs to carry the upstream wavelength indication, in a method similar to the above-mentioned method for utilizing the alloc-IDs 1012 to 1019.

FIG. 7 illustrates a schematic diagram of a position of wavelength indication information in a broadcast alloc-id message according to yet another embodiment. FIG. 7 shows the position of the Alloc-ID, as indicated by a dashed box in FIG. 7.

In a fourth implementation, the first message is a System_Profile message. Optionally, the wavelength indication information is located in a reserved position in the System_Profile message.

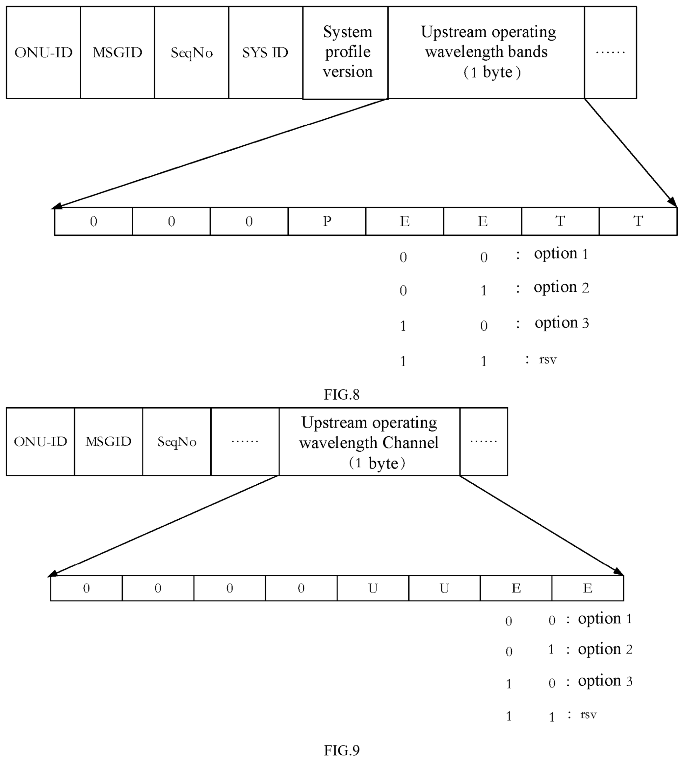

Optionally, the wavelength indication information is located in a 2nd bit and a 3rd bit of a 9th byte in the System_Profile message. Table 4 shows a structure of the System_Profile message. FIG. 8 illustrates a schematic diagram of a position of wavelength indication information in a System_Profile message according to still another embodiment. As shown in Table 4 and FIG. 8, the ninth byte in the System_Profile message is a field for upstream operating wavelength bands. When the OLT carries information via the system_profile message, consideration may be given to using bit3 and bit2 (EE) within the field for upstream operating wavelength bands in the System_Profile message to indicate upstream wavelength options. For example, it may be defined that when EE = 00, it represents that the current upstream wavelength adopted by the OLT is the option1; when EE = 01, it is the option 2; and when EE = 10, it is the option3. The remaining values are reserved values. When specifying the upstream wavelength, the OLT should not set EE to reserved values.

**Table 4 SystemProfile Message**

| Octet Number | Content | Description |
|---|---|---|
| 1-2 | ONU-ID | 0x03FF, Broadcast ONU-ID. |
| 3 | message type identity (Message type ID) | 0x17, "system profile" |
| 4 | sequence number (SeqNo) | 8-a bit broadcast PLOAM sequence number |
| 5-7 | system identity (SYS ID) | 20-a bit identity of TWDM within a certain field. |
| | | This is a reference value set by an operation support system (OSS). |
| | | The 8 least significant bits (LSB) of SYS ID are in a 7th byte; and the 4 most significant bits are in the lower 4 bits of a fifth byte. The upper 4 bits in the fifth byte are 0. |
| 8 | System profile version | VVVV 0000, where: |
| | | VVVV-4-bit system profile version number. |
| | | If the content of the system profile changes, the OLT CT should ensure that the system profile version number also changes, such that the ONU can detect updates solely according to the system profile version number. |
| 9 | Upstream operating wavelength bands | 000P EETT, where: |
| | | P is a reserved bit and set to 0 by a transmitter. |
| | | TT indicates upstream operating wavelength bands in a TWDM mode: |
| | | 00: Wide band option; |
| | | 01: Reduced band option; and |
| | | 10: Narrow band option. |
| | | Refer to details of the band options in applicable PMD recommendations. |
| | | EE-Upstream wavelength indication |
| | | The upstream wavelength indication identifies an upstream wavelength that the ONU must use. |
| | | 00-Upstream wavelength option1 |
| | | 01-Upstream wavelength option2 |
| | | 10-Upstream wavelength option3 |
| | | 11-Reserved value |
| ... | ... | ... |

In a fifth implementation, the first message is a Channel_Profile message. Optionally, the wavelength indication information is located in a reserved position in the Channel_Profile message.

Optionally, the wavelength indication information is located in the two least significant bits of a 23rd byte in the Channel_Profile message. Table 5 shows a structure of the Channel_Profile message. FIG. 9 illustrates a schematic diagram of a position of wavelength indication information in a Channel_Profile message according to a further embodiment. As shown in Table 5 and FIG. 9, the 23rd byte in the channel_profile message is a field for upstream operating wavelength channel (UWLCH) ID. The two least significant bits (EE) in the UWLCH ID field of the Channel_Profile message are used to indicate upstream wavelength options. For example, it may be defined that when EE = 00, it represents that the current upstream wavelength adopted by the OLT is the option1; when EE = 01, it is the option 2; and when EE = 10, it is the option3.The remaining values are reserved values. When specifying the upstream wavelength, the OLT should not set EE to reserved values.

**Table 5 Channel_Profile Message**

| Octet Number | Content | Description |
|---|---|---|
| 1-2 | ONU-ID | 0x03FF, Broadcast ONU-ID. |
| 3 | message type identity (Message type ID) | 0x18, "system profile". |
| 4 | sequence number (SeqNo) | 8-A bit broadcast PLOAM sequence number |
| ... | ... | ... |
| 23 | upstream operating wavelength channel identity (UWLCH ID) | An 8-bit byte is arranged in the following format: 0000 UUEE, where UUEE is the assigned upstream operating wavelength channel identity. In a time-division multiplexing (TDM) mode, EE is the assigned upstream wavelength indication. |
| | | EE: Upstream wavelength indication. |
| | | The upstream wavelength indication identifies an upstream wavelength that the ONU must use. |
| | | 00-Upstream wavelength option1 |
| | | 01-Upstream wavelength option2 |
| | | 10-10-Upstream wavelength option3 |
| | | 11-ITU-T-Other reserved values |
| ... | ... | ... |

In a sixth implementation, the first message is a newly added PLOAM message. The newly added PLOAM message is mainly used to announce capability information of the OLT, with upstream wavelength indication being one of the capabilities. The new PLOAM message is primarily used for the OLT to announce its own capability set information. For example, the fifth byte may be designed as the UWLCH ID field, with the two least significant bits (bit1 and bit0) being upstream wavelength indication bits, for indicating the upstream wavelength options. Reserved fields in a Padding field may be used in the future to announce other capability set information of the OLT.

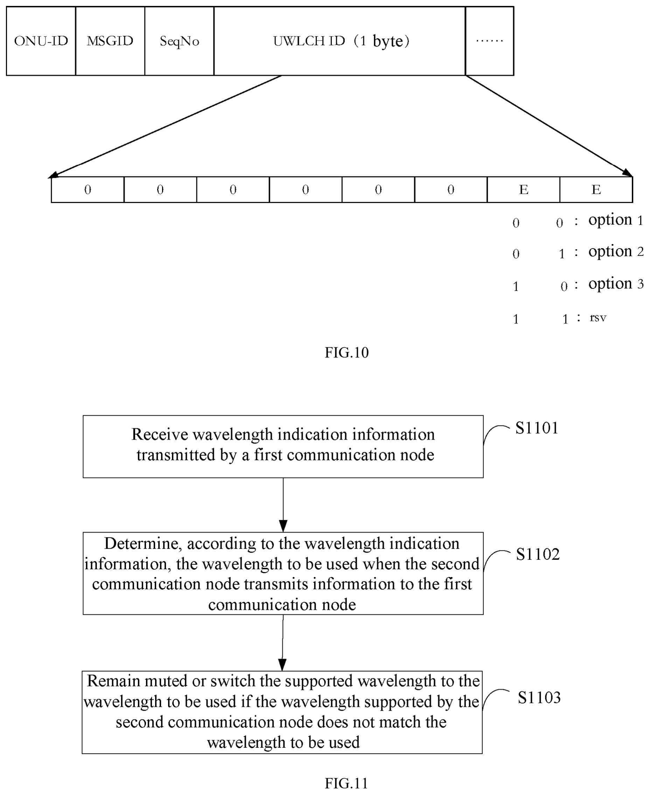

Optionally, the wavelength indication information is located in the two least significant bits of a fifth byte in the newly added PLOAM message. Table 6 shows a structure of a newly added PLOAM message. FIG. 10 illustrates a schematic diagram of a position of wavelength indication information in a newly added PLOAM message according to a further embodiment. As shown in Table 6 and FIG. 10, the fifth byte in the newly added PLOAM message is a UWLCH ID field. The two least significant bits (EE) in the UWLCH ID field are used to indicate the wavelength indication information. For example, it may be defined that when EE = 00, it represents that the current upstream wavelength adopted by the OLT is the option1; when EE = 01, it is the option 2; and when EE = 10, it is the option3. The remaining values are reserved values. When specifying the upstream wavelength, the OLT should not set EE to reserved values.

**Table 6 Newly Added PLOAM Message.**

| Octet Number | Content | Description |
|---|---|---|
| 1-2 | ONU-ID | 0x03FF, Broadcast ONU-ID. |
| 3 | message type identity (Message type ID) | 0x20, "Get/Set Olt Capability Set". |
| 4 | sequence number (SeqNo) | 8- bit broadcast PLOAM sequence number |
| 5 | UWLCH ID | An 8-bit byte is arranged in the following format: 0000 00EE, where EE is the assigned upstream operating wavelength channel identity. In the TDM mode, EE is the assigned upstream wavelength indication. |
| | | EE: Upstream wavelength indication. |
| | | The upstream wavelength indication identifies an upstream wavelength that the ONU must use. |
| | | 00-Upstream wavelength option1. |
| | | 01-Upstream wavelength option2. |
| | | 10-Upstream wavelength option3. |
| | | 11-ITU-T-Other reserved values. |
| 6 to 40 | Padding | Filled with 0 by the transmitter; and ignored by a receiver. |
| 41 to 48 | Messages Integrity Check (MIC) | Messages integrity check, calculated using the default PLOAM integrity key. \| |

In this embodiment, after the second communication node receives the wavelength indication information and determines that the wavelength it supports do not match the wavelength supported by the first communication node, the second communication node enters the mute state, that is, there is no response to the SN opening window issued by the first communication node. Even if the SN opening window issued by the first communication node is received, the SN PLOAM message is not reported. Alternatively, in the case that the second communication node supports a plurality of wavelengths, when it is determined that the wavelength the second communication node supports does not match the wavelength supported by the first communication node, the supported wavelength is switched to the wavelength to be used, thereby avoiding potential upstream wavelength conflicts caused by the second communication node continuously transmitting the SN PLOAM message.

According to the method for transmitting information provided in this embodiment, the first communication node transmits the wavelength indication information to the second communication node, and the wavelength indication information is used to indicate the wavelength to be used when the second communication node transmits information to the first communication node, so as to notify the second communication node of the wavelength to be used when transmitting information to the first communication node, that is, the wavelength supported by the first communication node. When the second communication node determines that the wavelength it supports does not match the wavelength supported by the first communication node, the second communication node enters the mute state or switches the supported wavelength to the wavelength to be used, thereby avoiding the problem of conflicts with other systems caused by the second communication node continuously responding to the SN opening window when the wavelength supported by the second communication node does not match the wavelength supported by the first communication node, and improving communication reliability.

FIG. 11 illustrates a schematic flowchart of a method for receiving information according to an embodiment. The method for receiving information provided in this embodiment is applied to a second communication node. In this embodiment, the second communication node (also referred to as a second communication node device) may be an ONU. As shown in FIG. 11, the method includes the following operations.

S1101: receiving wavelength indication information transmitted by a first communication node.

The wavelength indication information is used for indicating a wavelength to be used when the second communication node transmits information to the first communication node.

In this embodiment, a method for transmitting the wavelength indication information by the first communication node is as shown in the embodiment in FIG. 3 and various optional implementations, which is not detailed in this embodiment.

S1102: determining, according to the wavelength indication information, the wavelength to be used when the second communication node transmits information to the first communication node.

In the S1102, the second communication node parses the wavelength indication information to obtain the wavelength to be used when the second communication node transmits information to the first communication node.

S1103: remaining muted or switching the supported wavelength to the wavelength to be used if the wavelength supported by the second communication node does not match the wavelength to be used.

Remaining muted in this embodiment means not responding to the SN opening window issued by the first communication node. Even if the SN opening window issued by the first communication node is received, no SN PLOAM message is reported, thereby avoiding potential upstream wavelength conflicts caused by the second communication node continuously transmitting the SN PLOAM message. In the case that the second communication node supports a plurality of wavelengths, if the wavelength the second communication node supports does not match the wavelength to be used, the supported wavelength is switched to the wavelength to be used. After wavelength switching, the second communication node may achieve normal communication with the first communication node.

In an embodiment, if the wavelength supported by the second communication node matches the wavelength to be used, the second communication node communicates with the first communication node with the wavelength to be used. One possible communication method is that the second communication node normally responds to the SN opening window, that is, if the second communication node is currently in the O2 to O3 state and receives the SN opening window issued by the first communication node, the SN PLOAM message is reported with the wavelength to be used. A state machine of the second communication node jumps normally according to subsequent events to complete registration under the first communication node.

In an embodiment, if the wavelength supported by the second communication node matches the wavelength to be used, the wavelength supported by the second communication node is transmitted to the first communication node, thereby improving flexibility and further improving communication reliability.

Optionally, the wavelength supported by the second communication node may be transmitted to the first communication node via the SN PLOAM message.

Optionally, the wavelength supported by the second communication node may be transmitted to the first communication node via the three least significant bits of a thirty-seventh byte in the SN PLOAM message. Table 7 shows a structure of an SN PLOAM message. As shown in Table 7, the thirty-seventh byte in the SN PLOAM message is a field for the upstream line rate and wavelength option capability set. The wavelength supported by the second communication node may be transmitted to the first communication node via bits 4, 5, and 6 (DEF) of the thirty-seventh byte. For example, D may be set to 1 to indicate that the second communication node supports the option1, and D=0 to indicate that the second communication node does not support the option1; E may be set to 1 to indicate that the second communication node supports the option2, and E=0 to indicate that the second communication node does not support the option2; and F may be set to 1 to indicate that the second communication node supports the option3, and F=0 to indicate that the second communication node does not support the option3.

**Table 7 SN PLOAM Message**

| Octet Number | Content | Description |
|---|---|---|
| 1-2 | ONU-ID | 0x3FF, unassigned ONU-ID; or in a case of an ONU with a plurality of PON interfaces performs activation on the second and subsequent PON interfaces, it is the ONU-ID pre-assigned to an activated flying PON interface. |
| 3 | Message type ID | 0x01, "Serial_Number_ONU" |
| 4 | SeqNo | Set to 0 in all Serial_Number_ONU PLOAM instances. |
| 5-8 | Vendor ID | See Section 11.2.6.1. |
| 9-12 | Vendor-specific serial number (VSSN) | See Section 11.2.6.1. |
| 13-16 | Random delay | The random delay used by the ONU to transmit this message, expressed as a time quantity. |
| 17-18 | Correlation tag | See Section 11.2.6.3. |
| 19-22 | Current downstream PON-ID | The PON-ID obtained by the ONU from the current downstream wavelength channel. |
| 23-26 | Current upstream PON-ID | The PON-ID field in the channel_profile message contains the upstream operating wavelength channel identity, through which the ONU transmits upstream frames. |
| 27-34 | Calibration record status | See Section 11.2.6.4. |
| 35 | Tuning granularity | See Section 11.2.6.5. |
| 36 | One-step tuning time | See Section 11.2.6.6. |
| 37 | Upstream line rate and wavelength option capability set | A bitmap is arranged in the following format: 0DEF ABCL, which identifies the upstream wavelength option capability set and a nominal line rate capability set of the ONU. |
| | | Wavelength option capability set: |
| | | D-Whether the wavelength option option1 is supported: |
| | | D=1: The ONU supports the wavelength option option1. |
| | | D=0: The ONU does not support the wavelength option option1. |
| | | E-Whether the wavelength option option2 is supported: |
| | | E=1: The ONU supports the wavelength option option2. |
| | | E=0: The ONU does not support the wavelength option option2. |
| | | F-Whether the wavelength option option3 is supported: |
| | | F=1: The ONU supports the wavelength option option3. |
| | | F=0: The ONU does not support the wavelength option option3. |
| | | Nominal line rate capability set |
| | | A-Upstream nominal line rate ρ0φ0: |
| | | A=0: Not supported; |
| | | A=1: Supported |
| | | B-Upstream nominal line rate ρ0φ1: |
| | | B=0: Not supported; |
| | | B=1: Supported |
| | | C-Upstream nominal line rate ρ0φ2: |
| | | C=0: Not supported; |
| | | C=1: Supported |
| | | L-Reserved bit, set to 0 by the transmitter. |
| ... | ... | ... |

According to the method for receiving information provided in this embodiment, by receiving the wavelength indication information transmitted by the first communication node, the wavelength indication information is used to indicate the wavelength to be used when the second communication node transmits information to the first communication node. The wavelength to be used when the second communication node transmits information to the first communication node is determined according to the wavelength indication information. If the wavelength supported by the second communication node does not match the wavelength to be used, the second communication node remains muted or switches the supported wavelength to the wavelength to be used, thereby avoiding the problem of conflicts with other systems caused by the second communication node continuously responding to the SN opening window when the wavelength supported by the second communication node does not match the wavelength supported by the first communication node, and improving communication reliability.

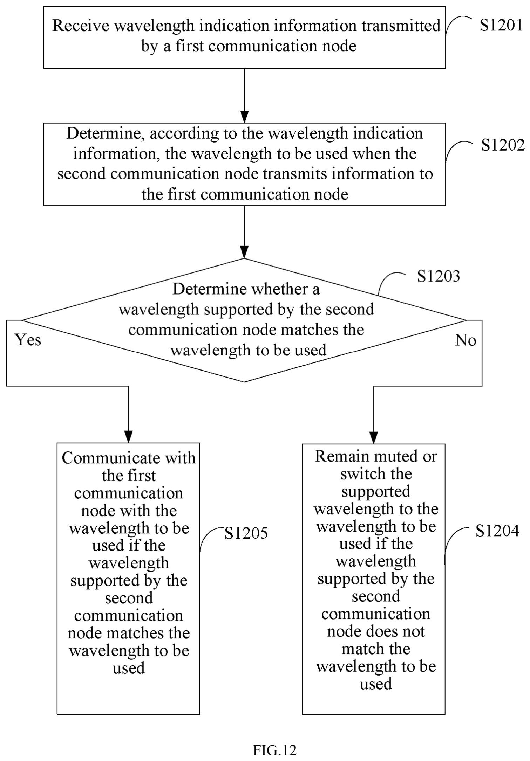

FIG. 12 illustrates a schematic flowchart of a method for receiving information according to another embodiment. This embodiment provides a detailed description of other operations included in the information receiving method based on the embodiment shown in FIG. 11 and various optional implementations. As shown in FIG. 12, the method for receiving information provided in this embodiment includes the following operations:
S1201: receiving wavelength indication information transmitted by a first communication node.

The wavelength indication information is used for indicating a wavelength to be used when the second communication node transmits information to the first communication node.

In this embodiment, a method for transmitting the wavelength indication information by the first communication node is as shown in the embodiment in FIG. 3 and various optional implementations, which is not detailed in this embodiment.

S1202: determining, according to the wavelength indication information, the wavelength to be used when the second communication node transmits information to the first communication node.

S1203: determining whether a wavelength supported by the second communication node matches the wavelength to be used.

In an embodiment, if the wavelength supported by the second communication node is equal to the wavelength to be used or overlaps with a wavelength range to be used, it is determined that the wavelength supported by the second communication node matches the wavelength to be used.

When the wavelength is a specific value, wavelength equality means that numerical values of the wavelengths are equal. When the wavelength is a wavelength range, the overlap between the wavelength supported by the second communication node and the wavelength range that should be used means that there is an overlap between the range of the wavelength supported by the second communication node and the range of the wavelength to be used.

In an embodiment, if the wavelength supported by the second communication node is not equal to the wavelength to be used or does not overlap with a wavelength range that should be used, it is determined that the wavelength supported by the second communication node does not match the wavelength to be used.

S1204: remaining muted or switch the supported wavelength to the wavelength to be used if the wavelength supported by the second communication node does not match the wavelength to be used.

S1205: communicating with the first communication node with the wavelength to be used if the wavelength supported by the second communication node matches the wavelength to be used.

According to the information receiving method provided in this embodiment, when the wavelength supported by the second communication node does not match the wavelength to be used, the second communication node remains muted or switches the supported wavelength to the wavelength to be used, thereby avoiding a problem of conflicts with other systems caused by the second communication node continuously responding to an SN opening window when the wavelength supported by the second communication node does not match the wavelength supported by the first communication node, and improving communication reliability; and normal communication between the second communication node and the first communication node may be achieved when the wavelength supported by the second communication node matches the wavelength supported by the first communication node.

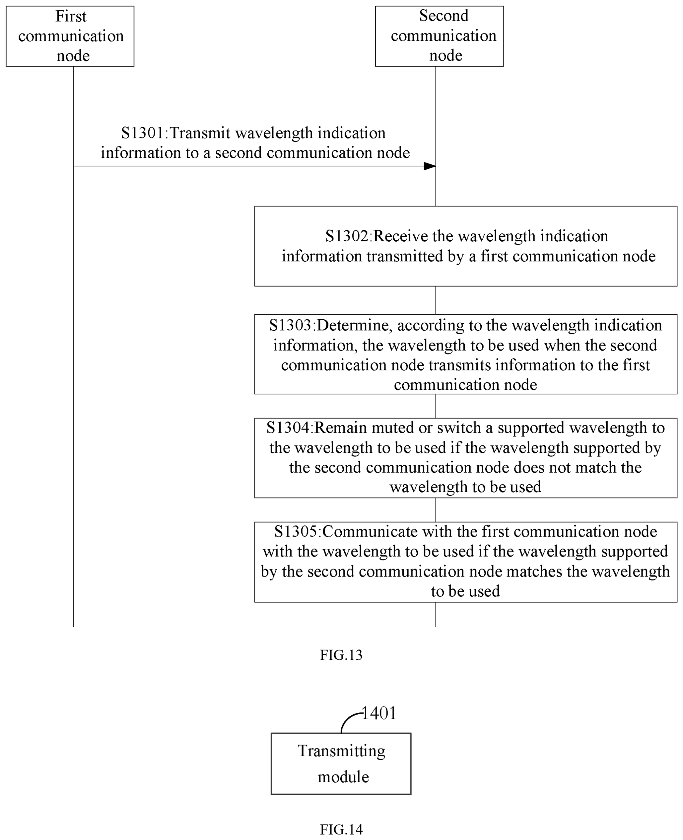

FIG. 13 illustrates a schematic diagram of an interaction process of a method for transmitting and receiving information according to an embodiment. The method for transmitting and receiving information provided in this embodiment is described from the perspective of the interaction between a first communication node and a second communication node. As shown in FIG. 13, the method for transmitting and receiving information includes the following operations.

S1301: transmitting wavelength indication information to the second communication node.

The wavelength indication information is used for indicating a wavelength to be used when the second communication node transmits information to the first communication node.

An implementation process and technical principle of the S1301 are similar to those of the S301, and will not be detailed here.

S1302: receiving the wavelength indication information transmitted by the first communication node.

An implementation process and technical principle of the S1302 are similar to those of the S1101, and will not be detailed here.

S1303: determining, according to the wavelength indication information, the wavelength to be used when the second communication node transmits information to the first communication node.

An implementation process and technical principle of the S1303 are similar to those of the S1102, and will not be detailed here.

S1304: remaining muted or switching a supported wavelength to the wavelength to be used if the wavelength supported by the second communication node does not match the wavelength to be used.

An implementation process and technical principle of the S1304 are similar to those of the S1103, and will not be detailed here.

S1305: communicating with the first communication node with the wavelength to be used if the wavelength supported by the second communication node matches the wavelength to be used.

According to the method for transmitting and receiving information provided in this embodiment, when determining that the wavelength it supports does not match the wavelength supported by the first communication node, the second communication node remains muted or switches the supported wavelength to the wavelength to be used, thereby avoiding a problem of conflicts with other systems caused by the second communication node continuously responding to an SN opening window when the wavelength supported by the second communication node does not match the wavelength supported by the first communication node, and improving communication reliability.

FIG. 14 illustrates a schematic structural diagram of an apparatus for transmitting information according to an embodiment. The apparatus for transmitting information may be configured in a first communication node. As shown in FIG. 14, the apparatus for transmitting information according to this embodiment includes the following module: a transmitting module 1401.

The transmitting module 1401 is configured to transmit wavelength indication information to a second communication node.

The wavelength indication information is used for indicating a wavelength to be used when the second communication node transmits information to the first communication node.

In an embodiment, the transmitting module 1401 is configured to transmit the wavelength indication information to the second communication node via a first message.

In an embodiment, the first message includes at least one of the following: a burst profile PLOAM message, an OC body message, a broadcast alloc-id message, a system_profile message, a channel_profile message, or a newly added PLOAM message.

In an embodiment, in the case that the first message is a burst profile PLOAM message, the wavelength indication information is located in a reserved position in the burst profile PLOAM message.

Optionally, the wavelength indication information is located in a second bit and a third bit of a sixth byte in the burst profile PLOAM message.

In an embodiment, there is a mapping relationship between burst profile indexes in the burst profile PLOAM message and the wavelength indication information. The transmitting module 1401 is further configured to transmit BWmap entry information to the second communication node. The BWmap entry information includes a burst profile index corresponding to the wavelength indication information.

In an embodiment, in the case that the first message is an OC body message, the wavelength indication information is located in a reserved position in a PON- ID field.

Optionally, the wavelength indication information is located in the two least significant bits of a DWLCH ID in the PON-ID field.

In an embodiment, in the case that the first message is a broadcast alloc-id message, the wavelength indication information has a mapping relationship with alloc-ids.

Optionally, the wavelength indication information is used to indicate at least one of a first wavelength, a second wavelength, or a third wavelength. The first wavelength has a mapping relationship with alloc-ids 1020 to 1023 among alloc-ids, where the alloc-ids 1020 to 1023 further respectively mapped to four transmission rates or rate combinations. The second wavelength has a mapping relationship with any four alloc-ids of alloc-ids 1012 to 1019 and 1024 to 16383 among the alloc-ids, where the any four alloc-ids are further respectively mapped to the above-mentioned four transmission rates or rate combinations. The third wavelength has a mapping relationship with other four alloc-ids than the any four alloc-ids from alloc-ids 1012 to 1019 and 1024 to 16383, where the other four alloc-ids are further respectively mapped to the above-mentioned four transmission rates or rate combinations.

In an embodiment, in the case that the first message is a System_Profile message, the wavelength indication information is located in a reserved position in the System_Profile message.

Optionally, the wavelength indication information is located in a second bit and a third bit of a ninth byte in the System_Profile message.

In an embodiment, in the case that the first message is a channel_profile message, the wavelength indication information is located in a reserved position in the channel_profile message.

Optionally, the wavelength indication information is located in the two least significant bits of a twenty-third byte in the Channel_Profile message.

In an embodiment, in the case that the first message is a newly added PLOAM message, the wavelength indication information is located in the two least significant bits of a fifth byte in the newly added PLOAM message.

In an embodiment, the first communication node is an optical line terminal (OLT), and the second communication node is an optical network unit (ONU).

In an embodiment, the wavelength to be used when the second communication node transmits information to the first communication node includes at least one of the following wavelength ranges: 1260 nm to 1280 nm, 1290 nm to 1310 nm, and 1284 nm to 1288 nm.

In an embodiment, the wavelength indication information is used to indicate an option of a wavelength to be used when the second communication node transmits information to the first communication node. The wavelength range for option1 is 1260 nm to 1280 nm, the wavelength range for option2 is 1290 nm to 1310 nm, and the wavelength range for option3 is 1284 nm to 1288 nm.

The apparatus for transmitting information provided in this embodiment is for implementing the method for transmitting information in the above-mentioned embodiment. An implementation principle and technical effects of the apparatus for transmitting information provided in this embodiment are similar to those of the above-mentioned embodiment, which are not detailed here.

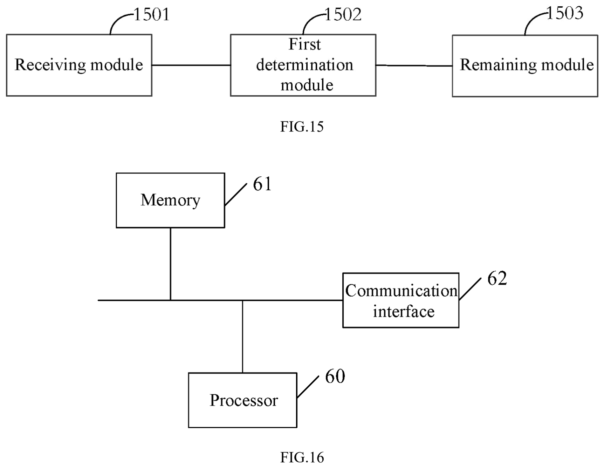

FIG. 15 illustrates a schematic structural diagram of an apparatus for receiving information according to an embodiment. The apparatus for receiving information may be configured in a second communication node. As shown in FIG. 15, the apparatus for receiving information according to this embodiment includes the following modules: a receiving module 1501, a first determination module 1502, and a remaining module 1503.

The receiving module 1501 is configured to receive wavelength indication information transmitted by a first communication node.

The wavelength indication information is used for indicating a wavelength to be used when the second communication node transmits information to the first communication node.

The first determination module 1502 is configured to determine, according to the wavelength indication information, the wavelength to be used when the second communication node transmits information to the first communication node.

The remaining module 1503 is configured to remain muted or switch a supported wavelength to the wavelength to be used if the wavelength supported by the second communication node does not match the wavelength to be used.

In an embodiment, the apparatus further includes: a second determination module, configured to determine whether the wavelength supported by the second communication node matches the wavelength to be used.

In an embodiment, the second determination module is configured to: determine that the wavelength supported by the second communication node matches the wavelength to be used if the wavelength supported by the second communication node is equal to the wavelength to be used or overlaps with a wavelength range that should be used; and determine that the wavelength supported by the second communication node does not match the wavelength to be used if the wavelength supported by the second communication node is not equal to the wavelength to be used or does not overlap with the wavelength range that should be used.

In an embodiment, the apparatus further includes: a communication module, configured to communicate with the first communication node with the wavelength to be used if the wavelength supported by the second communication node matches the wavelength to be used.

In an embodiment, the apparatus further includes: a transmitting module, configured to transmit the wavelength supported by the second communication node to the first communication node if the wavelength supported by the second communication node matches the wavelength to be used.

In an embodiment, the transmitting module is configured to transmit the wavelength supported by the second communication node to the first communication node via an SN PLOAM message. Optionally, the transmitting module is configured to transmit the wavelength supported by the second communication node to the first communication node via the three least significant bits of a thirty-seventh byte in the SN PLOAM message.

The apparatus for receiving information provided in this embodiment is for implementing the method of receiving information in the above-mentioned embodiment. An implementation principle and technical effects of the information receiving apparatus provided in this embodiment are similar to those of the above-mentioned embodiment, which are not detailed here.

An embodiment of the present application further provides a communication node, including a processor. The processor is configured to implement the method according to any one of the embodiments of the present application when executing a computer program. Specifically, the communication node may be a first communication node or a second communication node. The first communication node includes: a processor. The processor is configured to implement the method for transmitting information according to any one of the embodiments of the present application when executing a computer program. The second communication node includes: a processor. The processor is configured to implement the information receiving method according to any one of the embodiments of the present application when executing a computer program. Exemplarily, the first communication node may be an OLT according to any one of the embodiments of the present application. The second communication node may be an ONU according to any one of the embodiments of the present application.

FIG. 16 illustrates a schematic structural diagram of a communication node according to an embodiment. As shown in FIG. 16, the communication node includes a processor 60, a memory 61, and a communication interface 62. There may be one or more processors 60 within the communication node, with FIG. 16 illustrating an example using a single processor 60. The processor 60, the memory 61, and the communication interface 62 within the communication node may be connected through a bus or other methods, with FIG. 16 illustrating an example of connection through a bus. The bus represents one or more types of bus architectures, including memory buses or memory controllers, peripheral buses, graphics acceleration ports, processor buses, or local buses employing any of various bus architectures.

As a computer-readable storage medium, the memory 61 may be configured to store a software program, a computer-executable program, and a module, such as a program instruction/module corresponding to the method according to the embodiments of the present application. The processor 60 executes at least one functional application and data processing of the communication node by executing software programs, instructions, and modules stored in the memory 61, thereby implementing the above-mentioned method.

The memory 61 may include a program storage zone and a data storage zone, where the program storage zone may store an operating system and an application program needed by at least one function; and the data storage zone may store data, etc. created according to terminal usage. In addition, the memory 61 may include a high-speed random access memory and may further include a non-volatile memory, such as at least one disk memory device, a flash memory, or other non-volatile solid state memory devices. In some examples, the memory 61 may include memories remotely disposed relative to the processor 60, and these remote memories may be connected to the communication node through networks. The examples of the above-mentioned networks include, but are not limited to, an Internet, an intranet, a network, a mobile communication network, and a combination thereof.

The communication interface 62 is configured for data receiving and transmitting.

An embodiment of the present application further provides a computer-readable storage medium, having a computer program stored therein that, when executed by a processor, causes the method provided in any embodiment of the present application to be implemented.

The computer storage medium according to this embodiment of the present application may adopt any combination of one or more computer-readable media. The computer-readable medium may be a computer-readable signal medium or a computer-readable storage medium. The computer-readable storage medium may be, for example but not limited to, electric, magnetic, optical, electromagnetic, infrared, or semiconductor systems, apparatuses, or devices, or any combination thereof. The computer-readable storage medium includes (non-exhaustive list): an electrical connection with one or more wires, a portable computer disk, a hard drive, a random access memory (RAM), a read-only memory (ROM), an electrically erasable, programmable read-only memory (EPROM), a flash, fiber optics, a portable compact disc read-only memory (CD-ROM), an optical storage device, a magnetic storage device, or any proper combination of the above. In the present application, the computer-readable storage medium may be any tangible medium including or storing a program, and the program may be used by or in conjunction with an instruction execution system, apparatus, or device.

The computer-readable signal medium may include data signals propagated in a base band or propagated as a part of a carrier wave, and the data signals carry computer-readable program code. The propagated data signal may take various forms, including but not limited to, an electromagnetic signal, an optical signal, or any suitable combination of the above. The computer-readable signal medium may also be any computer-readable medium except the computer-readable storage medium. The computer-readable medium may transmit, propagate, or transmit programs for use by or for use in conjunction with the instruction execution system, apparatus, or device.

The program code included in the computer-readable medium may be transmitted by any suitable medium including but not limited to wireless, a wire, an optical cable, radio frequency (RF), etc., or any suitable combination of the above.

Computer program code for performing operations of the present disclosure may be written in one or more programming languages or a combination of the plurality of programming languages, where the programming languages include object-oriented programming languages (e.g., Java, Smalltalk, C++, Ruby, and Go), and further include conventional procedural programming languages (e.g., "C" language or similar programming languages).The program code may be completely executed on a computer of a user, partially executed on a computer of a user, executed as a standalone software package, partially executed on a computer of a user and partially executed on a remote computer, or completely executed on a remote computer or server. In a case of involving the remote computer, the remote computer may be connected to the computer of the user through any kind of network (including a local area network (LAN) or a wide area network (WAN)), or may be connected to an external computer (e.g., connected through the Internet with the aid of an Internet service provider).

Those skilled in the art should understand that the term "user terminal" covers any suitable type of wireless user device, such as mobile phones, portable data processing apparatuses, portable web browsers, or in-vehicle mobile stations.

Typically, various embodiments of the present application may be implemented in hardware or dedicated circuits, software, logic, or any combination thereof. For example, some aspects may be implemented in hardware, while other aspects may be implemented in firmware or software executable by a controller, a microprocessor, or other computing apparatus, although the present application is not limited to this.

This embodiment of the present application may be implemented by executing computer program instructions through a data processor of a mobile apparatus, such as in a processor entity, or by hardware, or by a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

A block diagram of any logical flow in the accompanying drawings of the present application may represent program steps, or may represent interconnected logical circuits, modules, and functions, or may represent a combination of the program steps, the logical circuits, the modules, and the functions. The computer program may be stored in the memory. The memory may be of any type suitable for the local technical environment and may be implemented using any suitable data storage technology, for example, including but not limited to, a read-only memory (ROM), a random access memory (RAM), and an optical memory apparatus and system (a digital video disc (DVD), or a compact disk (CD), etc.). The computer-readable medium may include a non-transitory storage medium. The data processor may be of any type suitable for the local technical environment, for example, including but not limited to, a general-purpose computer, a special-purpose computer, a microprocessor, a digital signal processor (DSP), an application specific integrated circuit (ASIC), a field-programmable gate array (FPGA), and a processor based on a multi-core processor architecture.

## Claims

1. A method for transmitting information, applied to a first communication node, the method comprising:
transmitting wavelength indication information to a second communication node, wherein the wavelength indication information is used for indicating a wavelength to be used when the second communication node transmits information to the first communication node.

2. The method of claim 1, wherein transmitting the wavelength indication information to the second communication node comprises:
transmitting the wavelength indication information to the second communication node via a first message.

3. The method of claim 2, wherein the first message comprises at least one of the following:
an upstream burst profile physical layer operations, administration and maintenance, PLOAM, message;
an operation control, OC, body message;
a broadcast allocation-ID, Broadcast Alloc-ID, message;
a system_profile message;
a channel_profile message; or
a newly added PLOAM message.

4. The method of claim 3, wherein in the case that the first message is the burst profile PLOAM message, the wavelength indication information is located in a reserved position in the burst profile PLOAM message.

5. The method of claim 4, wherein the wavelength indication information is located in a second bit and a third bit of a sixth byte in the burst profile PLOAM message.

6. The method of claim 4, wherein a burst profile index in the burst profile PLOAM message has a mapping relationship with the wavelength indication information, and the method further comprises:
transmitting BWmap entry information to the second communication node, wherein the BWmap entry information comprises the burst profile index corresponding to the wavelength indication information.

7. The method of claim 3, wherein in the case that the first message is the OC body message, the wavelength indication information is located in a reserved position in a passive optical network-identity, PON-ID, field.

8. The method of claim 7, wherein the wavelength indication information is located in the two least significant bits of a downstream wavelength channel identity, DWLCH ID, in the PON-ID field.

9. The method of claim 3, wherein in the case that the first message is the broadcast alloc-ID message, the wavelength indication information has a mapping relationship with an alloc-id.

10. The method of claim 9, wherein the wavelength indication information is used for indicating at least one of a first wavelength, a second wavelength, or a third wavelength;
the first wavelength has a mapping relationship with alloc-ids 1020 to 1023 among alloc-ids, wherein the alloc-ids 1020 to 1023 are further respectively mapped to four transmission rates or rate combinations;
the second wavelength has a mapping relationship with any four alloc-ids of alloc-ids 1012 to 1019 and 1024 to 16383 among the alloc-ids, wherein the any four alloc-ids are further respectively mapped to the four transmission rates or rate combinations; and
the third wavelength has a mapping relationship with other four alloc-ids than the any four alloc-ids from alloc-ids 1012 to 1019 and 1024 to 16383 among the alloc-ids, wherein the other four alloc-ids are further respectively mapped to the four transmission rates or rate combinations.

11. The method of claim 3, wherein in the case that the first message is the system_profile message, the wavelength indication information is located in a reserved position in the system_profile message.

12. The method of claim 11, wherein the wavelength indication information is located in a second bit and a third bit of a ninth byte in the system_profile message.

13. The method of claim 3, wherein in the case that the first message is the channel_profile message, the wavelength indication information is located in a reserved position in the channel_profile message.

14. The method of claim 13, wherein the wavelength indication information is located in the two least significant bits of a twenty-third byte in the channel_profile message.

15. The method of claim 3, wherein in the case that the first message is a newly added PLOAM message, the wavelength indication information is located in the two least significant bits of a fifth byte in the newly added PLOAM message.

16. The method of any of claims 1 to 15, wherein the first communication node is an optical line terminal, OLT, and the second communication node is an optical network unit, ONU.

17. The method of any of claims 1 to 15, wherein the wavelength to be used when the second communication node transmits information to the first communication node comprises at least one of the following wavelength ranges: 1260 nm to 1280 nm, 1290 nm to 1310 nm, or 1284 nm to 1288 nm.

18. The method of any of claims 1 to 15, wherein the wavelength indication information is used to indicate an option of a wavelength to be used when the second communication node transmits information to the first communication node, wherein a wavelength range for an option 1 is 1260 nm to 1280 nm, a wavelength range for an option 2 is 1290 nm to 1310 nm, and a wavelength range for an option 3 is 1284 nm to 1288 nm.

19. A method for receiving information, applied to a second communication node, the method comprising:
receiving wavelength indication information transmitted by a first communication node, wherein the wavelength indication information is used for indicating a wavelength to be used when the second communication node transmits information to the first communication node;
determining, according to the wavelength indication information, the wavelength to be used when the second communication node transmits information to the first communication node; and
in the case that a wavelength supported by the second communication node does not match the wavelength to be used, remaining muted or switching the supported wavelength to the wavelength to be used.

20. The method of claim 19, further comprising:
determining whether the wavelength supported by the second communication node matches the wavelength to be used.

21. The method of claim 20, wherein determining whether the wavelength supported by the second communication node matches the wavelength to be used comprises:
in the case that the wavelength supported by the second communication node is equal to or has an overlapped range with the wavelength to be used, determining that the wavelength supported by the second communication node matches the wavelength to be used; or
in the case that the wavelength supported by the second communication node is not equal to or has no overlapped range with the wavelength to be used, determining that the wavelength supported by the second communication node does not match the wavelength to be used.

22. The method of claim 19, further comprising:
in the case that the wavelength supported by the second communication node matches the wavelength to be used, communicating with the first communication node with the wavelength to be used.

23. The method of claim 19, further comprising:
transmitting the wavelength supported by the second communication node to the first communication node in the case that the wavelength supported by the second communication node matches the wavelength to be used.

24. The method of claim 23, wherein transmitting the wavelength supported by the second communication node to the first communication node comprises:
transmitting, to the first communication node, the wavelength supported by the second communication node via a serial number, SN, physical layer operations, administration and maintenance, PLOAM, message.

25. The method of claim 24, wherein transmitting, to the first communication node, the wavelength supported by the second communication node via the SN PLOAM message comprises:
transmitting, to the first communication node, the wavelength supported by the second communication node via the three least significant bits of a thirty-seventh byte in the SN PLOAM message.

26. A first communication node, comprising a processor, wherein the processor is configured to, when executing a computer program, implement the method for transmitting information of any of claims 1 to 18.

27. A second communication node, comprising a processor, wherein the processor is configured to, when executing a computer program, implement the method for receiving information of any of claims 19 to 25.

28. A computer-readable storage medium, having a computer program stored therein, wherein the computer program, when executed by a processor, implements the method for transmitting information of any of claims 1 to 18 or implements the method for receiving information of any of claims 19 to 25.
